# EUROPÄISCHE PATENTSCHRIFT

(11) **EP 1 343 574 B1**
(45) Veröffentlichungstag und Bekanntmachung des Hinweises auf die Patenterteilung: **06.10.2004**
(21) Anmeldenummer: 01949252.9
(22) Anmeldetag: 11.06.2001
(51) Int. Cl.: B01D 46/24

(54) **FILTER ZUM ABSCHEIDEN VON FREMDSTOFFEN AUS EINEM GASSTROM**
FILTER FOR THE SEPARATION OF CONTAMINANTS FROM A GAS STREAM
FILTRE POUR SEPARER DES IMPURETES CONTENUES DANS UN COURANT GAZEUX

(30) Priorität: 23.10.2000 DE 10052524
(43) Veröffentlichungstag der Anmeldung: 17.09.2003
(73) Patentinhaber: Beko Technologies GmbH, 41468 Neuss (DE)
(72) Erfinder: SCHLENSKER, Herbert, 51381 Leverkusen (DE); SINSTEDTEN, Johannes, 41352 Korschenbroich (DE)
(74) Vertreter: Bauer, Wulf, Dr.
(86) Internationale Anmeldenummer: PCT/DE2001/002168
(87) Internationale Veröffentlichungsnummer: WO 2002/038247

(56) Entgegenhaltungen:
- WO-A-99/30799
- DE-A- 3 909 402
- GB-A- 2 295 970
- US-A- 4 336 043
- US-A- 5 755 842
- US-A- 5 961 678

## Beschreibung

Die Erfindung bezieht sich auf ein Filter zum Abscheiden von Fremdstoffen aus einem Gasstrom, mit a) einem mehrteiligen Gehäuse, das einen Gehäusekörper und einen Gehäusekopf aufweist, wobei der Gehäusekopf einen Einlaß für den zu reinigenden Gasstrom und einen Auslaß hat und der Gehäusekopf weiterhin eine erste Dichtfläche aufweist, und b) mit einem im Gehäuse untergebrachten Filterelement, das einen Elementkopf und einen rohrförmigen Elementkörper aufweist, der eine zentrale Elementachse und einen Elementinnenraum hat, wobei der Elementkopf eine zweite Dichtfläche aufweist, die mit der ersten Dichtfläche lösbar zusammenwirkt und ein bogenförmig verlaufender Einlaßkrümmer zwischen dem Einlaß und dem Elementinnenraum ausgebildet ist.

Ein derartiges Filter ist aus der WO 99/30799 bekannt. Bei diesem vorbekannten Filter bildet der Elementkopf den vollständigen Einlaßkrümmer aus. Er schliesst unmittelbar an den Einlaß an. Der Gehäusekopf trägt damit nicht zur Ausbildung des Einlaßkrümmers bei. Die erste Dichtfläche, die im Gehäusekopf ausgebildet ist, steht praktisch rechtwinklig zur Elementachse, ebenso wie die zweite Dichtfläche. Die zweite Dichtfläche wird durch einen Dichtring gebildet, der axial wirkt. Es ist nicht auszuschliessen, dass dieser beim Einschieben so belastet wird, dass er aus seiner Halterung herauskommt. Weiterhin ist eine mechanische Führung notwendig, die ein präzises Einfinden der zweiten Dichtfläche zur ersten Dichtfläche hin und zugleich ein Anpressen dieser beiden Dichtflächen beim Einschieben bewirkt.

Nachteilig bei dem vorbekannten Filter ist weiterhin, dass eine Differenzdruckmessung zwischen Einlaß und Auslaß schwierig ist. Im genannten Dokument hat der Einlaßkrümmer einen speziellen Anschlußstutzen für die Erfassung des Drucks im Einlaßkrümmer. Dadurch wird die mechanische Ausbildung kompliziert, die zusätzliche Abdichtung erfordert besondere Vorkehrungen.

Schwierig ist auch die Herstellung des Elementkopfes mit seinem Einlaßkrümmer. Natürliche Entformungsverfahren können hier nicht eingesetzt werden. Zudem wird das Filterelement aufgrund des relativ grossen Elementkopfes sperriger. Das Filterelement ist bekanntlich ein Verbrauchsteil, das nach einer gewissen Anzahl von Betriebsstunden ausgetauscht wird.

Der Erfindung liegt die Aufgabe zugrunde, das vorbekannte Filter eingehend weiterzubilden, dass es einfacher zu fertigen ist, bequemer praktisch einzusetzen ist, die Vorteile eines ansich schon zuvor bekannten Einlaßkrümmers mit glatten Innenflächen aber beibehält.

Gelöst wird diese Aufgabe ausgehend von dem Filter der eingangs genannten Art dadurch, dass der Einlaßkrümmer teilweise im Gehäusekopf und teilweise im Elementkopf ausgebildet ist, dass die erste Dichtfläche und die zweite Dichtfläche sich in einer Dichtebene berühren, die in einem Winkel zwischen 90° und 60°, vorzugsweise zwischen 90° und 70° zur Elementachse verläuft, und dass eine radial angeordnete Dichtung in der Dichtebene vorgesehen ist, die eine der beiden Dichtflächen ausbildet.

Bei diesem Filter lässt sich der Gehäusekopf günstig in einem Gussverfahren fertigen, beispielsweise im Spritzguss oder im Druckguss. Ebenso lässt sich der Elementkopf einfach fertigen, insbesondere aus Kunststoff im Spritzgussverfahren oder dergleichen. Die Erfindung bietet den Vorteil, dass mit einfachen Herstellungsverfahren ein Einlaßkrümmer erhalten wird, der glatt ist und der zudem in seiner exakten Formgebung nicht vorbestimmt ist. Der Elementkopf greift in eine Aufnahmebohrung des Gehäusekopfes ein und füllt diese so aus, dass der Einlaßkrümmer gebildet wird. Das Übermaß der Aufnahmebohrung ist so bemessen, dass Aufnahmebohrung und die hierzu quer verlaufende Ausnehmung beginnend mit dem Einlaß und dem dahinter befindlichen Teil des Einlaßkanals durch eine einfache Form im formgebenden Verfahren erstellt werden können. Hierzu ist der Elementkopf vorzugsweise so ausgebildet, dass er die gesamte Krümmung auf dem kürzesten Strömungsweg übernimmt. Der längste Strömungsweg wird dabei im wesentlichen durch die Innenwand des Gehäusekopfes gebildet. Dadurch ist es möglich, dass die Aufnahmebohrung und der dem Gehäusekopf zugehörende Teil des Einlaßkrümmers durch zwei Kerne gebildet werden, die naturentformt werden können. Während ein Kern im Formhohlraum stationär sein kann, ist es für den anderen Kern lediglich notwendig, ihn auf einer linearen Bewegungsbahn verschiebbar zu machen. Komplizierte Kernbewegungen, beispielsweise auf einer gekrümmten Bahn, sind nicht notwendig.

Da ein Teil des Einlaßkrümmers durch den Gehäusekopf gebildet ist, kann am Gehäusekopf eine Druckmessung erfolgen. Dadurch ist eine Differenzdruckmessung einfach und wie beim sonstigen Stand der Technik üblich durchführbar.

Da nun eine radial angeordnete Dichtung verwendet wird, ist ein Abscheren eines Dichtungsringes deutlich weniger wahrscheinlich. Die Dichtung ist einfacher zu realisieren. Die Gleitwege eines Dichtringes gegenüber einer anderen Dichtfläche sind kürzer. Im Gegensatz zu einer axial wirkenden Dichtung sind nicht besondere Vorkehrungen notwendig, um ein Anpressen des Dichtringes gegen eine gegenüberliegende Dichtfläche zu erreichen, vielmehr gleichen sich die mechanischen Drücke auf den Dichtring insgesamt aus.

In einer bevorzugten Ausführung verläuft die Dichtfläche in einem Winkel grösser 90° zur Elementachse. Sie steht damit schräg zur Elementachse. Dies hat sich für eine gute Abdichtung als günstig erwiesen. Insbesondere ist ein Winkel von 83° der Dichtfläche zur Elementachse günstig. Bei einer derartigen schräg verlaufenden Dichtfläche kommt ein Dichtring zuerst an einer Stelle in Kontakt mit der zugehörigen ersten Dichtfläche, wenn das Filterelement in den Gehäusekopf eingeschoben wird. Erst danach kommen immer grössere Teile des Dichtringes in Kontakt mit der zugehörigen ersten Dichtfläche des Gehäusekopfes. Dies entspricht auch einem normalen Vorgehen beim Einschieben einer radial wirkenden Dichtung in eine Bohrung. Man vermeidet ein Aufsetzen des gesamten Dichtringes an die Bohrung, kippt vielmehr bei beginnendem Einsetzen an. Auf diese Weise wird eine Stufe im Kraftaufwand beim Einschieben verhindert, es werden Fehler beim Einsetzen vermieden.

In einer bevorzugten Weiterbildung wird der Einlaßkrümmer höchstens insoweit durch den Innenraum des Gehäusekopfes gebildet, als dieser Innenraum durch einen starren, durch den Einlaß auf einer linearen Bewegung einführbaren Kern begrenzt ist. Die übrigen Teile des Einlaßkrümmers bildet der Elementkopf aus. Dadurch lässt sich der Elementkopf einfach.

In einer bevorzugten Ausbildung berühren sich Elementkopf und Gehäusekopf entlang einer Trennfuge, die im Abstand von der Dichtebene vorgesehen ist und die gesehen von dieser Dichtebene zum Einlaß versetzt ist. Weiterhin ist der Verlauf des Einlaßkrümmers im Bereich dieser Trennfuge möglichst glatt. An dieser Trennfuge findet der Übergang von dem Teil des Einlaßkrümmers, der durch den Gehäusekopf gebildet wird, zu dem Teil des Einlaßkrümmers, der durch den Elementkopf gebildet wird, statt. Es ist vorteilhaft, wenn sich Gehäusekopf und Elementkopf an der Trennfuge in einer Stufe berühren. Dadurch wird ein klar definierter Anschlag erzielt. Es wird vermieden, dass Gehäusekopf oder Elementkopf spitz auslaufende Teile, die leicht beschädigt werden können, haben.

In einer bevorzugten Weiterbildung hat der Elementkopf im Übergang zum Elementkörper eine Aufweitung. Diese Aufweitung wirkt als Diffusor. Dadurch findet eine günstige Strömungsverteilung zum Elementinnenraum statt.

Besonders bevorzugt ist es, am Elementkopf ein erstes Positionierungsmittel auszubilden und am Gehäusekopf ein zweites Positionierungsmittel auszubilden, das mit dem ersten Positionierungsmittel zusammenwirkt. Beim Einführen des Filterelementes in den Gehäusekopf treten die beiden Positioniermittel in Kontakt, bevor die erste Dichtfläche die zweite Dichtfläche berührt. Dadurch ist ein Einsetzen des Filterelementes in den Gehäusekopf erleichtert. Eine falsche Orientierung des Filterelements im Bezug auf den Gehäusekopf kann nicht zu einem fehlerhaften Einsetzen führen. Die beiden Führungsmittel sind so ausgelegt, dass der Elementkörper nur in einer ganz bestimmten Drehposition vollständig in den Gehäusekopf eingeführt werden kann. Es soll hier noch einmal betont werden, dass wie beim eingangs genannten Stand der Technik das Filterelement ausschliesslich in einer ganz bestimmten Drehstellung mit dem Gehäusekopf zusammenwirkt.

Das erfindungsgemässe Filter ist zum Abscheiden von Fremdstoffen aller Art aus einem strömenden Gas bestimmt. Die Fremdstoffe können Feststoffe oder Flüssigkeiten sein. Der Gasstrom kann ein Gasgemisch sein. Als Gas kommt insbesondere Luft in Frage. Das Filter ist insbesondere als Druckgasfilter, vorzugsweise Druckluftfilter ausgebildet.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die im folgenden unter Bezugnahme auf die Zeichnung näher erläutert werden. In dieser Zeichnung zeigen:
- Fig. 1:: ein Schnittbild durch ein Filter mit einer Schnittebene, die durch eine zentrale Elementachse eines Filterelements geht,
- Fig. 2:: eine Seitenansicht eines Filterelements in gegenüber der Darstellung nach Figur 1 um 90° gedrehter Stellung,
- Fig. 3:: ein Schnittbild durch einen Filter in einer schnittbildlichen Ansicht wie Figur 1, jedoch nunmehr mit einer Dichtebene, die in einem Winkel von etwa 70° zur zentralen Elementachse steht,
- Fig. 4:: eine perspektivische Darstellung des Filterelements aus Figur 3 und, darüber befindlich, eines Gehäusekopfes wie in Figur 3, jedoch auf einer Durchmesserebene geschnitten dargestellt,
- Fig. 5:: eine perspektivische Darstellung ähnlich Figur 4 mit einem Oberteil eines Filterelements und einem darüber befindlichen, wiederum geschnitten dargestellten Gehäusekopf,
- Fig. 6:: eine Darstellung entsprechend Figur 5 in einer anderen Ausführung,
- Fig. 7:: eine Darstellung entsprechend Figur 5, jedoch in einer wiederum anderen Ausführung,
- Fig. 8:: eine Draufsicht auf den Elementkopf des Filterelements gemäss Figur 7,
- Fig. 9:: eine Draufsicht ähnlich Figur 8 für eine andere Ausführung,
- Fig. 10:: eine Draufsicht entsprechend Figur 8 für eine andere Ausführung,
- Fig. 11:: eine Draufsicht entsprechend Figur 8 auf eine andere Ausführung,
- Fig. 12:: eine Seitenansicht des Filters von aussen und
- Fig. 13:: ein Schnittbild durch ein Sperrelement, wie es in der Ausführung nach Figur 11 eingesetzt werden kann.

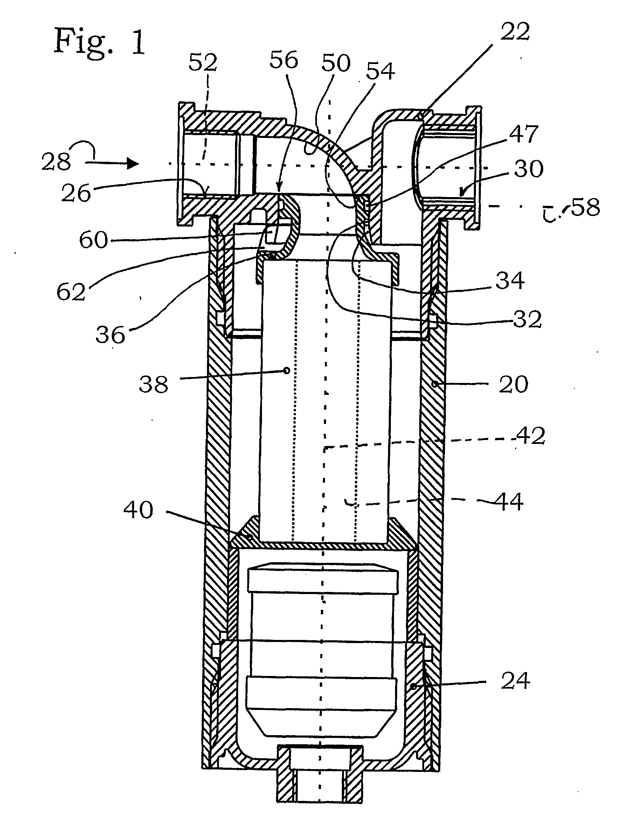

Wie aus Figur 1 ersichtlich ist, hat das Filter ein mehrteiliges Gehäuse. Das Gehäuse weist einen Gehäusekörper 20, einen Gehäusekopf 22 und einen Gehäuseboden 24 auf. Im Gehäusekopf 22 sind ein Einlaß 26 für den zu reinigenden Gasstrom, siehe Pfeil 28 und ein Auslaß 30 vorgesehen. Der Auslaß muss nicht notwendigerweise im Gehäusekopf ausgebildet sein. Der Gehäusekopf 22 hat weiterhin eine erste Dichtfläche 32, die hier durch einen Teil der Innenwand einer zylindrischen Aufnahmebohrung 34 gebildet wird.

Im Gehäuse ist ein Filterelement untergebracht. Es hat einen Elementkopf 36, einen rohrförmigen Elementkörper 38 und einen Elementboden 40. Unterhalb des Elementbodens 40 ist Raum für eine zusätzliche Einrichtung, beispielsweise einen Kondensatableiter, vorhanden.

Der Elementkörper 38 hat eine zentrale Elementachse 42 und einen Elementinnenraum 44, der zylindrisch und um die Elementachse 32 zentriert ist.

Die Ausbildung des Elementkörpers 38 ist beliebig. Es können auch oval geformte Elementkörper, Elementkörper mit im Querschnitt Sternform usw. eingesetzt werden. Es muss nur jeweils entsprechend der Elementkopf angepasst werden.

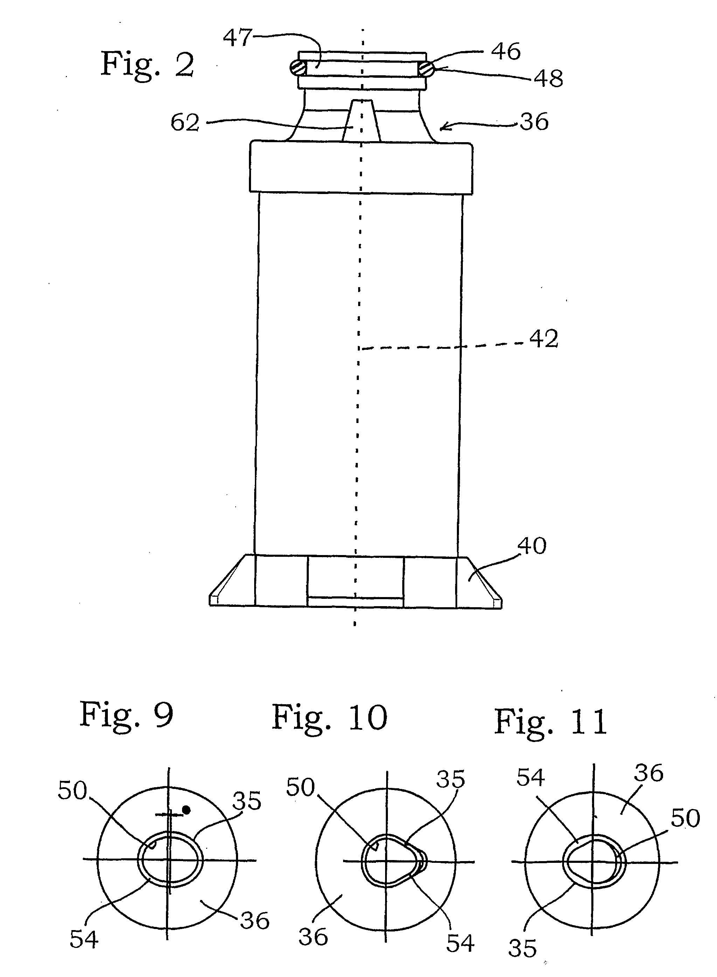

Der Elementkopf 36 hat in seinem oberen Teil eine radial von aussen zugängliche Nut 47 für einen Dichtring 46. Fig. 2 zeigt den eingesetzten Dichtring 46. Er bildet mit seiner Aussenfläche eine zweite Dichtfläche 48, die in dichtendem Kontakt mit der ersten Dichtfläche 32 ist (Figur 1).

Der Strömungsweg vom Einlaß 26 zum Elementinnenraum 44 umfasst einen Einlaßkrümmer 50, der möglichst glatt ausgebildete Innenwände aufweist. Dieser Einlaßkrümmer 50 soll die in Richtung des Pfeils 28 eintretende Gasströmung möglichst strömungsgünstig in den Elementinnenraum 44 hineinleiten, jedenfalls beitragen, dass die Strömung günstig ist.

Nach einem wesentlichen Merkmal der Erfindung ist dieser Einlaßkrümmer 50 einerseits durch den Gehäusekopf 32 und andererseits durch den Elementkopf 36 gebildet. Man erkennt aus Figur 1, dass der kürzeste Strömungsweg des Einlaßkrümmers ausschliesslich durch Flächen des Elementkopfes 36 gebildet wird, in der Figur 1 liegen diese Flächen oberhalb und rechts des linken Teilstücks des Dichtringes 46. Dagegen wird der grösste Teil des längsten Strömungsweges des Einlaßkrümmers 30 durch den Gehäusekopf ausgebildet. Nur ein kleines Stück Krümmung des längsten Strömungsweges wird durch Teile des Elementkopfes 36 realisiert, diesmal links des rechten Teils des Dichtringes 46. Damit wird also insgesamt der Einlaßkrümmer sowohl durch Teile des Gehäusekopfes 22 als auch durch Teile des Elementkopfes 36 gebildet.

Unter Einlaßkrümmer 50 wird dabei derjenige Teil des gesamten Einlaßkanals bezeichnet, der gekrümmte Wandungen hat. Teilbereiche des Einlaßkanals, die nicht gekrümmt sind, gehören nicht zum Einlaßkrümmer 50.

Damit der Gehäusekopf einfach entformt werden kann, ist die Achslinie der Aufnahmebohrung 34 versetzt zur Elementachse 42. Der Versatz ist in Richtung zum Einlaß 26 hin. Dadurch wird erreicht, dass der Innenradius des Einlaßkrümmers 50 ausschliesslich vom Elementkopf 36 gebildet wird. An der Stelle des kleinsten Strömungsweges erstreckt sich die Aufnahmebohrung 34 soweit zum Einlaß 26 hin, dass der Gehäusekopf 22 auf der Linie des kürzesten Strömungsweges keine Rundung aufweist. Die Aufnahmebohrung 34 hat eine Mantellinie, die dem Einlaß 26 näher liegt als alle anderen Mantellinien der Aufnahmebohrung 34. Diese Mantellinie liegt in der Ausführung nach Figur 1 in der Eintrittsebene des Einlaßkrümmers 50. Generell ist die Konstruktion unabhängig von der Form der Aufnahmebohrung so gewählt, dass die dem Einlaß 26 nächstliegende Mantellinie nicht den Einlaßkrümmer 50 schneidet, sondern in ihrer Verlängerung durch einen Bereich des Einlaßkanals verläuft, wo dieser parallel zu einer Einlaßachse 52 verlaufende Wandungen hat.

An der Stelle des längsten Strömungsweges ragt die Aufnahmebohrung 34 ebenfalls über den Querschnitt des Einlaßkrümmers 50 hinaus. Die zugehörige Mantellinie der Aufnahmebohrung 34, die dem Auslaß 30 am nächsten liegt, ist zum Auslaß hin gegenüber der lichten Öffnung des Einlaßkrümmers 50 versetzt. Dadurch wird eine Stufe 54 gebildet. Diese Stufe 54 ist nicht für das Entformen notwendig. Durch sie wird vielmehr eine Trennfuge 56 und ein definierter, präziser Übergang zwischen Elementkopf 36 und Gehäusekopf 22 geschaffen. Die Stufe 54 bildet einen definierten Anschlag beim Einschieben des Elementkopfes 36 in den Gehäusekopf 22, also beim Einsetzen des Filterelements.

Wie aus Figur 1 ersichtlich ist, liegt das obere Ende des Elementkopfes 36 in einer Ebene. In dieser Ebene befindet sich auch die Stufe 54. Die Stufe 54 wird durch zwei Kreise begrenzt, die exzentrisch zueinander sind. Ein Aussenkreis hat den Durchmesser der Aufnahmebohrung 34. Ein Innenkreis hat den Durchmesser des Einlaßkrümmers 50 an der Austrittsstelle des Gehäusekopfes 22. Diese beiden Kreise berühren sich an ihren dem Einlaß 26 nächstgelegenen Punkten. Damit hat die Stufe 54 ihre grösste Breite an der dem Einlaß 26 entferntesten Stelle und eine Breite 0 an ihrer dem Einlaß 26 nächstgelegenen Stelle.

Die Stufe 54 muss nicht notwendigerweise in einer Ebene liegen, dies wird noch aus den weiteren Ausführungsbeispielen ersichtlich. Die Stufe 54 befindet sich näher dem Einlaß 26 als eine Dichtebene 58, in der sich die erste Dichtfläche 32 und die zweite Dichtfläche 48 berühren. Im Ausführungsbeispiel nach Figur 1 verlaufen sowohl die Ebene der Stufe 54 als auch die Dichtebene 58 in einem Winkel von 90° zur Elementachse 42.

Der Elementkopf 36 umgreift mit einem Aussenbund den oberen Rand des Elementkörpers 38. Sein innerer Kanal weitet sich zum Elementinnenraum 44 hin auf, hier wird ein Diffusor ausgebildet.

Der Gehäusekörper 20 ist mit dem Gehäusekopf 22 durch ein Schraubgewinde verbunden. Diese Schraubgewinde ist zweigängig. Die beiden Gewindegänge sind um 180° versetzt. Dadurch ist es möglich, dass der Gehäusekörper 20 eine Frontfläche hat, die nicht nur dann vorne liegt, wenn der Einlaß 26 wie in Figur 1 nach links zeigt, sondern auch dann, wenn der Einlaß 26 nach rechts zeigt.

Um das Einführen des Filterelementes in das geöffnete Gehäuse zu erleichtern und die richtige Position des Filterelementes zum Gehäusekopf 22 beim Einsetzen zu finden, sind Führungsmittel vorgesehen. Der Gehäusekopf 22 hat ein erstes Führungsmittel. An einem des Gehäusekopfes 22 nach unten vorspringenden Bund, der sich um das untere Ende der Aufnahmebohrung 34 erstreckt, ist eine Kerbe vorgesehen. Am Elementkopf 36 ist ein hierzu passendes zweites Führungsmittel 62 ausgebildet. Dieses ist insbesondere aus Figur 2 ersichtlich. Es handelt sich um eine Rippe, die radial nach aussen wegsteht und axial verläuft.

Wird das Filterelement in den Gehäusekopf 22 eingeschoben, so stösst bei unrichtiger Orientierung das zweite Führungsmittel 62 an einen unteren, umlaufenden Rand des Bundes des Gehäusekopfes 22. Nur an der Stelle, wo dieser umlaufender Rand das erste Führungsmittel 60, also die Kerbe aufweist, ist ein Einschieben des Filterelementes in den Gehäusekopf 22 möglich.

Die dargestellten und beschriebenen Führungsmittel 60, 62 sind lediglich ein Ausführungsbeispiel. Es liegt im Ermessen eines Fachmannes, andere mechanische Lösungen zu finden. Bevorzugt wird eine Lösung, bei der eine Führung und Positionierung bereits schon dann erreicht wird, bevor überhaupt das oberste, freie Ende des Elementkopfes 22 Kontakt mit der Aufnahmebohrung 34 aufnehmen kann. In diesem Fall sind die Führungsmittel so ausgebildet, dass sie ein Einführen des Elementkopfes 36 in die Aufnahmebohrung 34 erzwingen. Eine trichterförmige Ausbildung ist vorteilhaft. Das erste Führungsmittel 60 kann bereits an der Innenwand des Gehäusekopfes ausgebildet sein, die dem Gewinde gegenüberliegt, das für die Verbindung mit dem Gehäusekörper 20 zuständig ist.

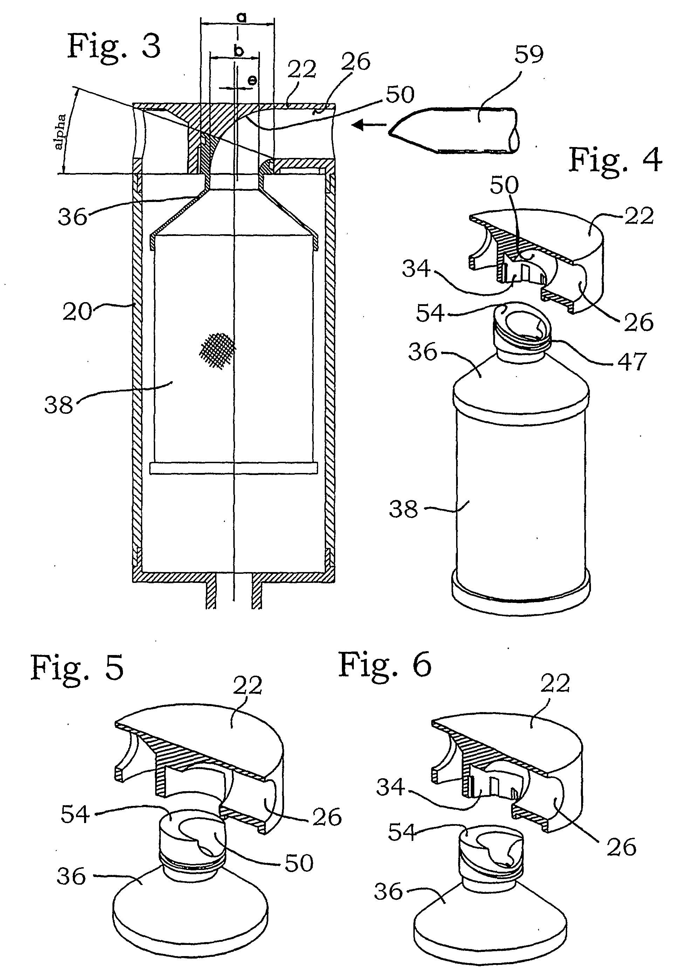

Das Ausführungsbeispiel nach den Figuren 3 und 4 stimmt im wesentlichen mit der bisher besprochenen Ausführung überein. Es werden, wie dies auch für die folgenden Ausführungsbeispiele gilt, dieselben Bezugszeichen wie für das erste Ausführungsbeispiel verwendet. Im folgenden wird auf die Unterschiede eingegangen:

Bei der Ausbildung nach den Figuren 3 und 4 verläuft die Dichtebene 58 nunmehr in einem Winkel ungleich 90° zur Elementachse 42. Der konkrete Winkel beträgt etwa 70°. Auch die Stufe 54 liegt nun auf einer Ebene, die im gleichen Winkel wie die Dichtebene 58 zur Elementachse 42 steht. Der Winkel ist in Figur 3 durch alpha gekennzeichnet.

Wiederum liegt Exzentrizität vor. Sie wird durch den Buchstaben e kenntlich gemacht, um das Mass e ist die Achse der Aufnahmebohrung 34 zum Einlaß 26 hin versetzt gegenüber dem lichten Innendurchmesser des Einlaßkrümmers 20 an seiner untersten Stelle, dieser Durchmesser ist mit b bezeichnet. Die Aufnahmebohrung 34 hat den Durchmesser a. Wie in der Ausführung nach den Figuren 1 und 2 ist die Innenwandung des kompletten Einlaßkrümmers glatt.

In Fig. 3 ist noch ein Kern 59 einer sonst nicht näher dargestellten Form gezeigt. Er befindet sich vor dem Einlass 26. Er muss lediglich linear, nämlich entlang der Einlassachse bewegt werden. Durch ihn wird der Teil des Einlasskrümmers 50 ausgeformt, der sich im Gehäusekopf befindet.

Wie aus den folgenden Ausführungsbeispielen noch ersichtlich wird, ermöglicht die Erfindung die Variation verschiedener Parameter. Dabei kann die Variation eines Parameters unabhängig erfolgen von der Variation eines anderen Parameters, jedenfalls gilt dies für eine Vielzahl von Parametern. Zu den Parametern gehören beispielsweise der freie Innenquerschnitt des Einlaßkrümmers. Hier muss nicht, wie dies in den bereits besprochenen Ausführungsbeispielen der Fall ist, überall ein Kreisquerschnitt vorliegen. Vielmehr kann der Querschnitt frei variiert werden. Er kann eingangs kreisförmig sein, sich dann zu einer Ellipse verformen und wieder kreisförmig sein. Es sind ganz beliebige Fallgestaltungen denkbar. Hier kann der günstigsten Ausbildung einer Strömung Rechnung getragen werden.

Ebenfalls kann als ein Parameter die Querschnittsform der Aufnahmebohrung 34 verändert werden, dies weitgehend unabhängig von der Form des Einlaßkrümmers 50. Die Aufnahmebohrung 34 kann den Querschnitt eines Polygons haben, sie kann in beliebiger Form unrund sein.

Als weiterer Parameter können die Lagen der Dichtebene 58 und der Trennfuge 56 geändert werden. Die Trennfuge muss nicht notwendigerweise in einer Ebene liegen. Die Dichtebene 58 muss nicht notwendigerweise eine Ebene sein, vielmehr kann sie einen beliebigen flächigen Verlauf haben. Es liegt aber immer eine Dichtlinie vor, die geschlossen umläuft. Die Dichtlinie kann auch gewellt sein. Sie kann auf einer gebogenen Fläche liegen.

In der Ausführung nach Figur 5 ist ein Beispiel gezeigt, bei dem eine Dichtlinie in einem Winkel von 90° zur Elementachse 42 steht und auf einer Dichtebene 58 liegt. Die Trennfuge 56 hat teilweise einen deutlich grösseren Abstand als in den bisher besprochenen Ausführungsbeispielen von der Dichtebene 58. Insbesondere verläuft sie aber nicht in einer Ebene. Vielmehr besteht sie zu einem Grossteil aus einem ebenen Verlauf, der dann in einen schräg hierzu etwa parabelförmigen Verlauf übergeht.

In der Ausführung nach Figur 6 ist im Unterschied zu Figur 5 die Dichtebene 58 nicht mehr rechtwinklig zur Elementachse 42, sondern in einem Winkel hierzu. Ein bevorzugter Winkel hierzu ist 83°. In der Ausführung nach

Figur 6 liegt der Winkel bei etwa 70°. Wiederum hat die Stufe 54 einen relativ grossen Anteil, der rechtwinklig zur Elementachse 42 verläuft, es schliesst sich ein parabelförmiger, schräger Teil an.

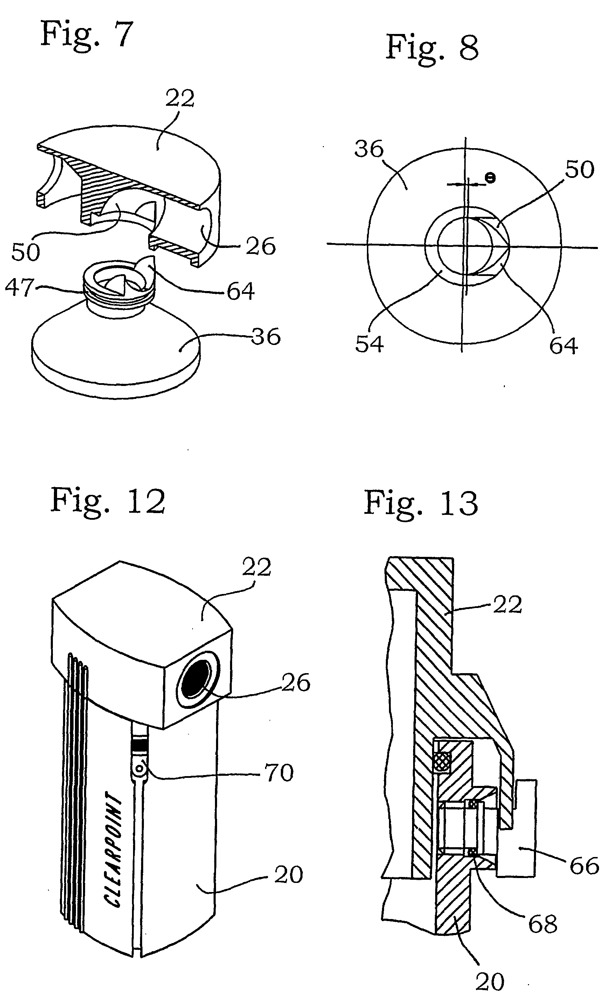

In der Ausführung nach Figur 7 ist die Dichtebene 58 rechtwinklig zur Elementachse 42. Gleiches gilt für die Stufe 54 auf dem grössten Teil ihrer Stufenfläche. Zusätzlich ragen von der Stufe 54 noch Ausgleichskörper 64 nach oben vor, die in ihnen zugeordneten Ausnehmungen des Gehäusekopfes 22 anliegen. Insgesamt wird eine glatte Innenwand des Einlaßkrümmers 50 gebildet. Diese Ausgleichskörper 64 sind vorgesehen, um den Gehäusekopf 22 hinterschnittfrei im Formverfahren herstellen zu können. Die Trennfuge 56 hat in der Ausführung nach Figur 7 einen Verlauf, der im wesentlichen durch einen Halbkreis, dann durch Begrenzungen der Ausgleichskörper 64 bestimmt ist.

Figur 8 zeigt eine Draufsicht auf den Elementkopf 36 nach Figur 7. Zu erkennen ist die Exzentrizität, die hier wiederum mit e angegeben ist. Der Verlauf der Trennfuge 56 wird sichtbar. Die Stufe 54 ist erkennbar.

Die Ausführungen nach den Figuren 9, 10 und 11 zeigen unterschiedliche Elementköpfe 36. Eine Aussenkontur 35 gibt den Verlauf der zugehörigen Aufnahmebohrung 34 wieder. Zu erkennen ist weiterhin der lichte Innenquerschnitt des Einlaßkanals im Bereich des Einlaßkrümmers 50. Figur 9 zeigt eine im wesentlichen elliptische Form beider Begrenzungslinien. In Figur 10 ist eine stärkere Abwandlung von der runden Ausgestaltung sichtbar, es liegt etwa Eiform vor. In Figur 11 ist die Eiform von Figur 10 um 180° verdreht.

Figur 11 zeigt einen Blick auf ein fertiges, zusammengesetztes Filter. Es ist an diesem Filter eine Sperrvorrichtung vorgesehen. Sie soll verhindern, dass der Gehäusekörper 20 vom Gehäusekopf 22 abgeschraubt wird, ohne dass zuvor ein im Gehäuse herrschender Druck abgebaut bzw. eine entsprechende Warnung gegeben wurde. Hierzu hat die Sperrvorrichtung die Aufgabe, zunächst eine Verbindung vom Innenraum des Gehäuses nach aussen zu schaffen, bevor ein Lösen des Gehäusekörpers 20 vom Gehäusekopf 22 überhaupt möglich ist. Die Sperrvorrichtung sperrt mechanisch die Verbindung zwischen Gehäusekörper 20 und Gehäusekopf 22 und lässt erst nach einer Schwenkbewegung, die aber zwangsläufig zunächst eine Öffnung vom Gehäuseinneren nach aussen schafft, zu, bevor überhaupt ein Lösen des Gehäusekörpers 20 möglich ist.

In Fig. 11 ist ein Schieber 70 vorgesehen, der in einer ersten Stellung einerseits eine Öffnung in der Wand des Gehäusekörpers 20 abdeckt, aber zugleich mechanisch den Gehäusekopf 22 formschlüssig erfasst. In seiner frei geschobenen Stellung ist Austritt von Druckluft möglich, wird aber auch die mechanische Sperrung aufgehoben.

In Fig. 13 ist eine andere Sperrvorrichtung gezeigt. Sie hat einen Drehknopf 66, der in einem Gewinde mit relativ grosser Steigung im Gehäusekörper 20 drehbar gelagert ist. Er greift formschlüssig in eine Aussparung des Gehäusekörpers 20 ein. Damit können Gehäusekörper 20 und Gehäusekopf 22 nicht relativ zueinander bewegt werden. Wird nun der Drehknopf 66 gedreht, so kommt eine Dichtung 68, die mit ihm verbunden ist, von einem Dichtsitz, der im Gehäusekörper 20 ausgebildet ist, frei. Die Gewindebohrung, in der der Drehknopf 66 gelagert ist, ist zum Innenraum des Gehäuses hin offen. Bei Lösen der Dichtung 68 wird also der Innenraum des Gehäuses mit dem Aussenraum verbunden. Es pfeift Druckgas heraus. Dies bedeutet eine Warnung für den Bedienenden. Er weiss nun, dass er etwas falsch macht, wenn er trotzdem den Öffnungsvorgang fortsetzt und insbesondere, wenn er tatsächlich den Gehäusekörper 20 vom Gehäusekopf 22 abschraubt.

Es können andere Ausführungen für die Sperrvorrichtung vorgesehen sein. So kann die Sperreinrichtung z. B. auch als Wippe ausgebildet sein, die ähnlich wie der Schieber funktioniert.

Derartige Sperrvorrichtungen eignen sich insbesondere für eine Schraubverbindung zwischen Gehäusekörper 20 und Gehäusekopf 22. Eine Bajonettverbindung zwischen beiden Teilen kann dagegen so ausgestaltet sein, dass bei Innendruck im System ein Lösen von vornherein nicht möglich ist.

Der Gehäusekörper 20 ist vorzugsweise als ein Strangpressprofil ausgeführt. Hierzu wird ein rohrförmiger Körper beliebigen Aussenquerschnitts hergestellt, der jeweils in der geeigneten Länge abgelängt wird.

Es ist auch möglich, die Winkellage der Dichtlinie und der Trennfuge 56 im Bezug auf die Einlaßachse 52 zu beschreiben. Sie liegen dann zwischen 0 und 20°, vorzugsweise bei 7°.

Es ist möglich, den oberhalb der Dichtlinie befindlichen Teile des Elementkopfes 36 beliebig auszubilden, beispielsweise ballig, kegelstumpfförmig usw.

## Patentansprüche

1. Filter zum Abscheiden von Fremdstoffen aus einem Gasstrom, mit a) einem mehrteiligen Gehäuse, das einen Gehäusekörper (20) und einen Gehäusekopf (22) aufweist, wobei der Gehäusekopf (22) einen Einlaß (26) für den zu reinigenden Gasstrom und einen Auslaß (30) hat und der Gehäusekopf (22) weiterhin eine erste Dichtfläche (32) aufweist, und b) mit einem im Gehäuse untergebrachten Filterelement, das einen Elementkopf (36) und einen rohrförmigen Elementkörper (38) aufweist, der eine zentrale Elementachse (42) und einen Elementinnenraum (44) hat, wobei der Elementkopf (36) eine zweite Dichtfläche (48) aufweist, die mit der ersten Dichtfläche (32) lösbar zusammenwirkt und ein bogenförmig verlaufender Einlaßkrümmer (50) zwischen dem Einlaß (26) und dem Elementinnenraum (44) ausgebildet ist, **dadurch gekennzeichnet, dass** der Einlaßkrümmer (50) teilweise im Gehäusekopf (22) und teilweise im Elementkopf (36) ausgebildet ist, dass die erste Dichtfläche (32) und die zweite Dichtfläche (48) sich in einer Dichtebene (58) berühren, die in einem Winkel zwischen 90° und 60°, vorzugsweise zwischen 90° und 70° zur Elementachse (42) verläuft, und dass eine radial angeordnete Dichtung (46) in der Dichtebene (58) vorgesehen ist, die eine der beiden Dichtflächen (32, 48) ausbildet.

2. Filter nach Anspruch 1, **dadurch gekennzeichnet, dass** die Dichtfläche (32) in einem Winkel < 90°, vorzugsweise < 85° zur Elementachse (42) verläuft, insbesondere in einem Winkel von 83° zur Elementachse (42) ist.

3. Filter nach Anspruch 1, **dadurch gekennzeichnet, dass** der Einlaßkrümmer (50) höchstens insoweit durch einen Innenraum des Gehäusekopfes (22) gebildet ist, als dieser Innenraum durch einen starren, durch den Einlaß (26) auf einer linearen Bewegung einführbaren Kern begrenzt ist.

4. Filter nach Anspruch 1, **dadurch gekennzeichnet, dass** der Gehäusekopf (22) eine Aufnahmebohrung (34) für den Elementkopf (36) aufweist, die mit dem Einlaß (26) kommuniziert und die im wesentlichen quer zu diesem verläuft.

5. Filter nach Anspruch 1, **dadurch gekennzeichnet, dass** sich der Elementkopf (36) und der Gehäusekopf (22) entlang einer Trennfuge (56) berühren, die im Abstand von der Dichtebene (58) ist und die gesehen von der Dichtebene (58) zum Einlaß (26) versetzt ist, und dass der Verlauf des Einlaßkrümmers (50) im Bereich dieser Trennfuge (56) möglichst glatt ist.

6. Filter nach Anspruch 1, **dadurch gekennzeichnet, dass** der Elementkopf (36) im Übergangsbereich zum Elementkörper (38) eine Aufweitung aufweist.

7. Filter nach Anspruch 1, **dadurch gekennzeichnet, dass** am Elementkopf (36) ein erstes Positionierungsmittel vorgesehen ist und dass am Gehäusekopf (22) ein zweites Positionierungsmittel vorgesehen ist, das mit dem ersten Positionierungsmittel zusammenwirkt und dass die beiden Positioniermittel (22, 36) beim Einführen des Filterelementes in den Gehäusekopf (22) in Kontakt treten und die Positionierung des Filterelements im Gehäusekopf (22) bestimmen, bevor die erste Dichtfläche (32) die zweite Dichtfläche (48) berührt.

8. Filter nach Anspruch 1, **dadurch gekennzeichnet, dass** der Verlauf der Dichtungskontur rund ist oder unrund ist, insbesondere unrund in Form einer ovalen oder elliptischen Kontur.

9. Filter nach Anspruch 1, **dadurch gekennzeichnet, dass** im Gehäusekopf (22) eine Stufe (54) ausgebildet ist, die zumindest sich über einen Teilbereich von 360° erstreckt und an die eine Frontfläche des Elementkopfes (36) anstösst, wenn das Filterelement in den Gehäusekopf (22) eingeführt wird.

## Claims

1. A filter for separating impurities from a gas stream with a) a multi-piece housing, said housing having a housing body portion (20) and a housing head portion (22), the housing head portion (22) having an inlet (26) for the gas stream to be cleaned and an outlet (30), and the housing head portion (22) having further a first sealing surface (32), and b) with a filter element accommodated within said housing, said filter element having an element head (36) and a tubular element body (38) which element body has a central element axis (42) and an element inner volume (44), said element head (36) having a second sealing surface (48) that releasably cooperates with the first sealing surface (32) and a curved inlet elbow (50) being configured between the inlet (26) and the element inner volume (44), wherein part of the inlet elbow (50) is configured inside the housing head portion (22) and part of it in the element head (36), wherein the first sealing surface (32) and the second sealing surface (48) meet in a sealing plane (58) that is inclined at an angle of between 90.degree. and 60.degree., preferably at an angle of between 90.degree. and 70.degree., to the element axis (42), and wherein a radially disposed seal (46) is provided in said sealing plane (58), said seal forming one of the two sealing surfaces (32, 48).

2. The filter of claim 1, wherein the sealing surface (32) is inclined at an angle < 90.degree., preferably at an angle < 85.degree., to the element axis (42), more specifically at an angle of 83.degree. to the element axis (42).

3. The filter of claim 1, wherein the inlet elbow (50) is at the most formed by an inner volume of the housing head portion (22) inasmuch as said inner volume is defined by a rigid core that may be introduced in a linear motion through the inlet (26).

4. The filter of claim 1, wherein the housing head portion (22) is provided with a receiving bore (34) for the element head (36) that communicates with the inlet (26) and is oriented substantially crosswise to said inlet.

5. The filter of claim 1, wherein the element head (36) and the housing head portion (22) meet along a parting line (56) that is spaced from the sealing plane (58) and that is offset relative to the inlet (26) as viewed from the sealing plane (58) and wherein the orientation of the inlet elbow (50) in the region of said parting line (56) is the smoothest possible.

6. The filter of claim 1, wherein the element head (36) has a flare in the transition zone toward the element body (38).

7. The filter of claim 1, wherein a first positioning means is provided on the element head (36) and wherein a second positioning means is provided on the housing head portion (22), said second positioning means cooperating with said first positioning means, and wherein the two positioning means (22, 36) come into contact as the filter element is being inserted into the housing head portion (22), determining the positioning of the filter element within the housing head portion (22) before the first sealing surface (32) meets the second sealing surface (48).

8. The filter of claim 1, wherein the contour of the seal is round or non round, more specifically non round in the form of an oval or elliptic contour.

9. The filter of claim 1, wherein a step (54) is configured within the housing head portion (22), said step extending at least over a partial range of 360.degree., a front surface of the element head (36) abutting thereon when the filter element is being introduced into the housing head portion (22).

## Revendications

1. Filtre pour la séparation de matières étrangères d'un courant de gaz, avec a) un boîtier en plusieurs parties qui présente un corps de boîtier (20) et une tête de boîtier (22), ladite tête de boîtier (22) ayant une entrée (26) pour le courant de gaz à épurer et une sortie (30), et la tête de boîtier (22) présentant en outre une première surface d'étanchéité (32), et avec b) un élément filtrant qui est logé dans le boîtier et qui présente une tête d'élément (36) et un corps tubulaire d'élément (38) qui a un axe central d'élément (42) et un intérieur d'élément (44), ladite tête d'élément (36) présentant une deuxième surface d'étanchéité (48) qui agit de concert de manière amovible avec la première surface d'étanchéité (32), et un coude d'admission (50) s'étendant en arc étant réalisé entre l'entrée (26) et l'intérieur d'élément (44), **caractérisé par le fait que** ledit coude d'admission (50) est réalisé en partie dans la tête de boîtier (22) et en partie dans la tête d'élément (36), que la première surface d'étanchéité (32) et la deuxième surface d'étanchéité (48) se touchent dans un plan d'étanchéité (58) qui s'étend à un angle compris entre 90° et 60°, de préférence entre 90° et 70° par rapport à l'axe d'élément (42), et qu'un joint (46) disposé radialement est prévu dans le plan d'étanchéité (58), qui forme l'une des deux surfaces d'étanchéité (32, 48).

2. Filtre selon la revendication 1, **caractérisé par le fait que** la surface d'étanchéité (32) s'étend à un angle < 90°, de préférence < 85° par rapport à l'axe d'élément (42), en particulier à un angle de 83° par rapport à l'axe d'élément (42).

3. Filtre selon la revendication 1, **caractérisé par le fait que** le coude d'admission (50) est formé par un intérieur de la tête de boîtier (22) tout au plus dans la mesure où cet intérieur est limité par un noyau rigide pouvant être introduit par l'entrée (26) sur un trajet linéaire.

4. Filtre selon la revendication 1, **caractérisé par le fait que** la tête de boîtier (22) présente un perçage de réception (34) pour la tête d'élément (36), qui communique avec l'entrée (26) et qui s'étend pour l'essentiel transversalement par rapport à celle-ci.

5. Filtre selon la revendication 1, **caractérisé par le fait que** ladite tête d'élément (36) et ladite tête de boîtier (22) se touchent le long d'une fente de séparation (56) qui se trouve à une certaine distance du plan d'étanchéité (58) et qui, vue depuis le plan d'étanchéité (58), est située en direction de l'entrée (26), et que l'allure du coude d'admission (50) dans la zone de cette fente de séparation (56) est aussi lisse que possible.

6. Filtre selon la revendication 1, **caractérisé par le fait que**, dans la zone de transition vers le corps d'élément (38), la tête d'élément (36) présente un évasement.

7. Filtre selon la revendication 1, **caractérisé par le fait qu'**un premier moyen de positionnement est prévu sur la tête d'élément (36) et qu'un deuxième moyen de positionnement est prévu sur la tête de boîtier (22), ledit deuxième moyen de positionnement coopérant avec ledit premier moyen de positionnement, et que les deux moyens de positionnement (22, 36) entrent en contact lorsque l'élément filtrant est introduit dans la tête de boîtier (22) et déterminent le positionnement de l'élément filtrant dans la tête de boîtier (22) avant que la première surface d'étanchéité (32) touche la deuxième surface d'étanchéité (48).

8. Filtre selon la revendication 1, **caractérisé par le fait que** l'allure du contour d'étanchéité est ronde ou non ronde, en particulier non ronde sous forme d'un contour ovale ou elliptique.

9. Filtre selon la revendication 1, **caractérisé par le fait qu'**un gradin (54) est réalisé dans la tête de boîtier (22), ce premier s'étendant au moins sur une zone partielle de 360°, et une surface frontale de la tête d'élément (36) s'appuyant sur ce gradin lorsque l'élément filtrant est introduit dans la tête de boîtier (22).
